(19) Europäisches Patentamt
European Patent Office
Office européen des brevets

(11) **EP 4 786 027 A1**

(12) **EUROPEAN PATENT APPLICATION**
published in accordance with Art. 153(4) EPC

(43) Date of publication:
**05.08.2026 Bulletin 2026/32**

(21) Application number: **24872585.5**

(22) Date of filing: **27.09.2024**

(51) International Patent Classification (IPC):
**B01D 39/16** (2006.01)    **B01D 71/32** (2006.01)

(52) Cooperative Patent Classification (CPC):
**B01D 39/16; B01D 46/52; B01D 71/32**

(86) International application number:
**PCT/JP2024/034841**

(87) International publication number:
**WO 2025/070805 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 JP 2023170752**

(71) Applicant: **Daikin Industries, Ltd.**
**Osaka-shi, Osaka 530-0001 (JP)**

(72) Inventors:
• **YOSHIOKA, Yukina**
  **Osaka-shi, Osaka 530-0001 (JP)**
• **INUI, Kunihiko**
  **Osaka-shi, Osaka 530-0001 (JP)**
• **KIYOTANI, Hideyuki**
  **Osaka-shi, Osaka 530-0001 (JP)**
• **OKADA, Kazuya**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**

(54) **AIR FILTER FILTRATION MATERIAL, METHOD FOR USING AIR FILTER FILTRATION MATERIAL, AND AIR TREATMENT DEVICE**

(57)    Provided are an air filter medium in which occurrence of mold is suppressed, a method for using an air filter medium, and an air treatment apparatus. The air filter medium includes a porous membrane having a surface mean height Rc of 6 μm or more and a water contact angle of 90 degrees or more on a membrane surface.

30a

**FIG. 1**

EP 4 786 027 A1

**Description**

Technical Field

The present disclosure relates to an air filter medium, a method for using an air filter medium, and an air treatment apparatus.

Background Art

In the related art, mold has sometimes occurred in air filter media that capture dust and the like contained in air.

For this issue, for example, PTL 1 (Japanese Unexamined Patent Application Publication No. 2003-205211) proposes an air filter medium in which an antibacterial reinforcing member obtained by using inorganic, organic, or natural antibacterial agents is stacked on a polytetrafluoroethylene porous membrane.

Summary of Invention

Technical Problem

Such an air filter medium desirably has new means for exhibiting an antibacterial function.

Solution to Problem

An air filter medium according to a first aspect includes a porous membrane having a surface mean height Rc of 6 $\mu$m or more and a water contact angle of 90 degrees or more on a membrane surface.

The air filter medium is preferably a mold-resistant air filter medium.

In this air filter medium, the occurrence of mold is suppressed.

An air filter medium according to a second aspect is the air filter medium according to the first aspect, wherein the porous membrane has a surface mean height Rc of 36 $\mu$m or more.

The surface mean height Rc of the porous membrane is preferably 37 $\mu$m or more and more preferably 38 $\mu$m or more.

In this air filter medium, the occurrence of mold is easily suppressed over a longer period of time.

An air filter medium according to a third aspect is the air filter medium according to the first aspect or the second aspect, wherein the porous membrane has a surface arithmetic mean roughness Ra of 6 $\mu$m or more.

In this air filter medium, the occurrence of mold is easily suppressed.

An air filter medium according to a fourth aspect is the air filter medium according to any one of the first aspect to the third aspect, wherein the porous membrane has a mean pore size of 2 $\mu$m or more.

In this air filter medium, the occurrence of mold is easily suppressed.

An air filter medium according to a fifth aspect is the air filter medium according to any one of the first aspect to the fourth aspect, wherein the porous membrane has a mean pore size of 10 $\mu$m or less.

An air filter medium according to a sixth aspect is the air filter medium according to any one of the first aspect to the fifth aspect, wherein the porous membrane has a thickness of 100 $\mu$m or more.

The thickness of the porous membrane is preferably 150 $\mu$m or more.

In this air filter medium, the occurrence of mold is easily suppressed.

An air filter medium according to a seventh aspect is the air filter medium according to any one of the first aspect to the sixth aspect, wherein a contact angle of an aqueous isopropyl alcohol solution having a concentration of 30 vol% is 127 degrees or more.

In this air filter medium, the occurrence of mold can be suppressed over a long period of time.

An air filter medium according to an eighth aspect is the air filter medium according to any one of the first aspect to the seventh aspect, wherein the porous membrane contains a fluororesin.

In this air filter medium, the occurrence of mold is suppressed in the porous membrane containing a fluororesin.

An air filter medium according to a ninth aspect is the air filter medium according to any one of the first aspect to the eighth aspect, wherein the porous membrane does not contain an antimold agent.

In this air filter medium, even when the antimold agent is not contained in the porous membrane, the occurrence of mold can be suppressed.

An air filter medium according to a tenth aspect is the air filter medium according to any one of the first aspect to the ninth aspect, wherein the air filter medium is used in an environment having a relative humidity of 60% or more.

In this air filter medium, the occurrence of mold can be suppressed even when the air filter medium is used in an environment in which mold easily occurs.

A method for using an air filter medium according to an eleventh aspect includes using the air filter medium according to any one of the first aspect to the ninth aspect in an environment having a relative humidity of 60% or more.

According to this method for using an air filter medium, the air filter medium can be used while the occurrence of mold is suppressed in the air filter medium even in an environment in which mold easily occurs.

An air treatment apparatus according to a twelfth aspect includes the air filter medium according to any one of the first aspect to the tenth aspect.

According to this air treatment apparatus, air can be treated using the air filter medium.

Brief Description of Drawings

[Fig. 1] Fig. 1 is a schematic cross-sectional view illustrating a layer structure of a mold-resistant air filter medium 30a.

[Fig. 2] Fig. 2 is a schematic cross-sectional view illustrating a layer structure of a mold-resistant air filter medium 30b.

[Fig. 3] Fig. 3 is a schematic cross-sectional view illustrating a layer structure of a mold-resistant air filter medium 30c.

[Fig. 4] Fig. 4 is a schematic cross-sectional view illustrating a layer structure of a mold-resistant air filter medium 30d.

[Fig. 5] Fig. 5 is an external perspective view of a filter pack.

[Fig. 6] Fig. 6 is an external perspective view of an air filter unit.

[Fig. 7] Fig. 7 is a schematic configuration diagram of an air treatment apparatus.

[Fig. 8] Fig. 8 includes photographs illustrating states 3 days after the start of a test conforming to a mold resistance test of JIS Z 2911 for Example 1 and Comparative Example 1.

[Fig. 9] Fig. 9 includes photographs illustrating states 1 week after the start of the test conforming to the mold resistance test of JIS Z 2911 for Example 1 and Comparative Example 1.

[Fig. 10] Fig. 10 includes photographs illustrating states at a fourth week of culture in an ISO 846 test for Example 1 and Example 3.

Description of Embodiments

Embodiments of a mold-resistant air filter medium according to one embodiment of the air filter medium, a method for using a mold-resistant air filter medium according to one embodiment of the method for using an air filter medium, and an air treatment apparatus will be described below using examples.

(1) Mold-resistant air filter medium

The mold-resistant air filter medium includes a porous membrane. The porous membrane has a surface mean height Rc of 6 $\mu$m or more. The porous membrane has a water contact angle of 90 degrees or more on a membrane surface. According to this mold-resistant air filter medium, the occurrence of mold in the porous membrane can be suppressed.

In the mold-resistant air filter medium, the collection efficiency for NaCl particles having a particle diameter of 0.1 $\mu$m measured when air containing the particles is passed at a flow rate of 5.3 cm/s is preferably 95.0% or more, more preferably 99.5% or more, and further preferably 99.95% or more.

In the mold-resistant air filter medium, for example, the pressure loss measured when air is passed at a flow rate of 5.3 cm/s is preferably less than 250 Pa, more preferably less than 200 Pa, and may be 30 Pa or more and 190 Pa or less.

(2) Example of structure of mold-resistant air filter medium

The specific structure of the mold-resistant air filter medium described above is not limited.

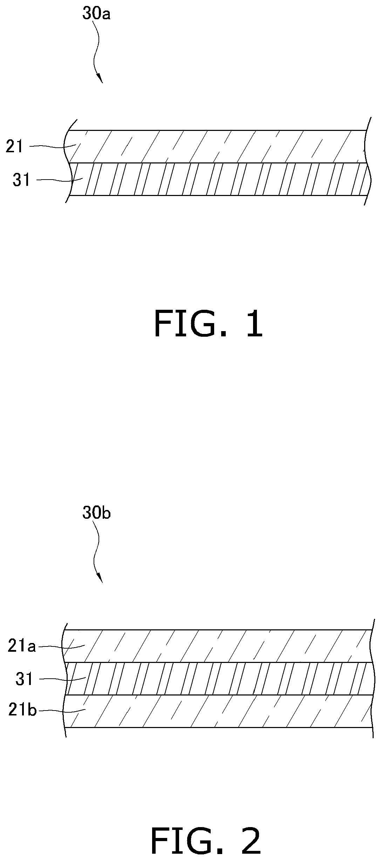

For example, as in a mold-resistant air filter medium 30a illustrated in Fig. 1, an air-permeable support member 21 and a porous membrane 31 may be stacked in order in an air flow direction. Herein, the porous membrane 31 may be disposed on an upstream side of air flow with respect to the air-permeable support member 21, or may be disposed on a downstream side of airflow with respect to the air-permeable support member 21.

For example, as in a mold-resistant air filter medium 30b illustrated in Fig. 2, an upstream air-permeable support member 21a, a porous membrane 31, and a downstream air-permeable support member 21b may be stacked in order in the air flow direction.

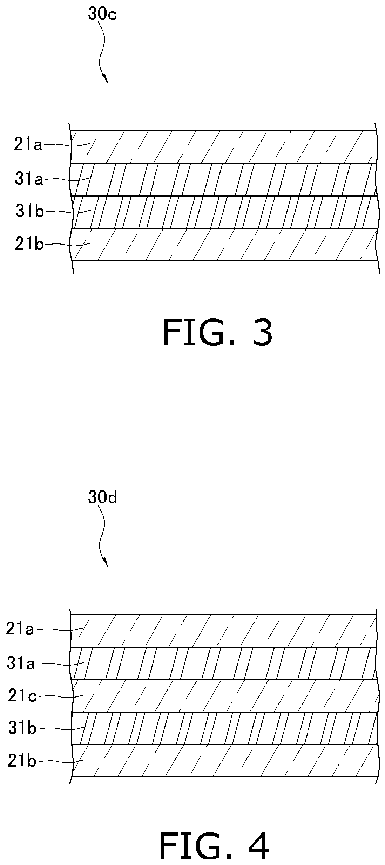

Alternatively, as in a mold-resistant air filter medium 30c illustrated in Fig. 3, an upstream air-permeable support member 21a, a first porous membrane 31a, a second porous membrane 31b, and a downstream air-permeable support member 21b may be stacked in order in the air flow direction.

Alternatively, as in a mold-resistant air filter medium 30d illustrated in Fig. 4, an upstream air-permeable support member 21a, a first porous membrane 31a, an intermediate air-permeable support member 21c, a second porous membrane 31b, and a downstream air-permeable support member 21b may be stacked in order in the air flow direction.

On the upstream side of the porous membrane 31 or the first porous membrane 31a, a pre-collection layer that is a membrane having a smaller pressure loss and a smaller collection efficiency may be provided.

A manner of stacking these membranes and members and the like is not limited. The stacking may be bonding using an anchor effect by partial melting or melting of a hot-melt resin due to heating, bonding using a reactive adhesive or the like, or simple stacking.

(3) Porous membrane

The porous membrane has a surface mean height Rc of 6 $\mu$m or more and a water contact angle of 90 degrees or more on a membrane surface. When the surface mean height Rc of the porous membrane is 6 $\mu$m or more, penetration of water into the porous membrane, which leads to occurrence of mold, is easily suppressed, and the porous membrane is easily maintained in a dry state. When the water contact angle on the membrane surface of the porous membrane is 90 degrees or more, water repellency on a surface of the porous membrane becomes good, water is easily repelled, and water is hardly retained on the surface of the porous membrane. Accordingly, the occurrence of mold in the porous membrane is suppressed. The present disclosure has been made based on the first discovery that there is a correlation between ease of occurrence of mold in a porous membrane whose water contact angle on a membrane surface is 90 degrees or more and the surface mean height Rc of the porous membrane.

From the viewpoint of suppressing the occurrence of mold over a longer period of time, the surface mean height Rc of the porous membrane is preferably 36 $\mu$m or more, more preferably 37 $\mu$m or more, further preferably 38 $\mu$m or more, still more preferably 40 $\mu$m or more, and most preferably 100 $\mu$m or more.

The surface mean height Rc of the porous membrane is not limited, but is preferably 300 $\mu$m or less and more preferably 200 $\mu$m or less, for example.

The surface mean height Rc is a value measured in conformity to the method described in JIS B 0601 (2013).

For example, in a case of a fluororesin porous membrane, the surface mean height Rc of the porous membrane can be decreased by decreasing the amount of a liquid lubricant (added when a sheet-shaped molded body is obtained by extruding, using a paste extruder, a powder obtained by coagulation) used in a production process, and can be increased by increasing the amount of the liquid lubricant. The mean height Rc of the porous membrane to be obtained can also be adjusted by controlling the types and blending ratio of components mixed when the fluororesin porous membrane is obtained. Alternatively, for example, in a case of a fluororesin porous membrane, the surface mean height Rc of the porous membrane can be increased by decreasing a drawing ratio at which an unfired fluororesin film is drawn, and can be decreased by increasing the drawing ratio.

From the viewpoint that water is hardly retained on the surface of the porous membrane and a contact area with the porous membrane is easily reduced, the water contact angle of the porous membrane is 90 degrees or more, preferably 120 degrees or more, and more preferably 140 degrees or more.

The water contact angle refers to a contact angle determined by a $\theta/2$ method. The water contact angle is measured as a contact angle of a droplet 30 seconds after the droplet is dropped onto the surface of the porous membrane.

From the viewpoint that water is hardly retained on the surface of the porous membrane and a contact area with the porous membrane is easily reduced, the contact angle of an aqueous isopropyl alcohol solution having a concentration of 20 vol% is preferably 127 degrees or more and more preferably 130 degrees or more.

The contact angle of the aqueous isopropyl alcohol solution having a concentration of 20 vol% refers to a contact angle determined by a $\theta/2$ method. The contact angle of the aqueous isopropyl alcohol solution having a concentration of 20 vol% is measured as a contact angle of a droplet 30 seconds after the droplet is dropped onto the surface of the porous membrane. The aqueous isopropyl alcohol solution having a concentration of 20 vol% is a solution in which the volume ratio of water:IPA is 80:20.

From the viewpoint that water is hardly retained on the surface of the porous membrane and a contact area with the porous membrane is easily reduced, the contact angle of an aqueous isopropyl alcohol solution having a concentration of 30 vol% is preferably 127 degrees or more and more preferably 129 degrees or more.

The contact angle of the aqueous isopropyl alcohol solution having a concentration of 30 vol% refers to a contact angle determined by a $\theta/2$ method. The contact angle of the aqueous isopropyl alcohol solution having a concentration of 30 vol% is measured as a contact angle of a droplet 30 seconds after the droplet is dropped onto the surface of the porous membrane. The aqueous isopropyl alcohol solution having a concentration of 30 vol% is a solution in which the volume ratio of water:IPA is 70:30.

Since the surface tension is decreased in comparison with evaluation of the contact angle using water, the aqueous solution containing isopropyl alcohol can be said to be a liquid that is more easily absorbed than water. Therefore, the contact angle using the aqueous solution containing isopropyl alcohol tends to be small compared to a test of the contact angle using water.

From the viewpoint of suppressing the occurrence of mold over a longer period of time, the surface arithmetic mean roughness Ra of the porous membrane is preferably 6 μm or more, more preferably 7 μm or more, and further preferably 20 μm or more. The surface arithmetic mean roughness Ra of the porous membrane is not limited, but is, for example, 100 μm or less. The surface arithmetic mean roughness Ra is a value measured in conformity to the method described in JIS B 0601 (2013).

For example, in a case of a fluororesin porous membrane, the surface arithmetic mean roughness Ra of the porous membrane can be adjusted by controlling the amount of a liquid lubricant used in a production process. The arithmetic mean roughness Ra of the porous membrane to be obtained can also be adjusted by controlling the types and blending ratio of components mixed when the fluororesin porous membrane is obtained.

From the viewpoint that water is hardly retained in the porous membrane, the mean pore size of the porous membrane is preferably 2 μm or more and more preferably 2.2 μm or more. The mean pore size of the porous membrane may be, for example, 10 μm or less. This mean pore size is also referred to as a mean flow pore size and is measured in conformity to ASTM F316-86.

The thickness of the porous membrane is, for example, preferably 100 μm or more, more preferably 130 μm or more, and further preferably 150 μm or more. As the thickness of the porous membrane increases, it is possible to increase the collection efficiency while forming a structure in which water is hardly retained by increasing the pore size. The thickness of the porous membrane refers to a total thickness when a plurality of porous membranes are stacked. Herein, when two or more porous membranes are stacked, a porous membrane located on the upstream side of air flow to be passed preferably has a larger thickness and a larger pore size than a porous membrane located on the downstream side of air flow. This can easily suppress the occurrence of mold on the upstream side of the porous membranes. For example, in a case of a fluororesin porous membrane, the thickness of the porous membrane can be increased by increasing the amount of a liquid lubricant used in a production process, and can be increased by decreasing the drawing ratio.

In the above-described porous membrane, the occurrence of mold is suppressed even when an antimold agent is not contained in the porous membrane. If an antimold agent is contained, the performance of the air filter medium may be deteriorated due to separation from the porous membrane. Therefore, an antimold agent such as an antibacterial agent is preferably not contained in the porous membrane. Non-limiting examples of the antimold agent include organic antimold agents such as a benzimidazole compound, a pyrithione compound, and an isothiazoline compound; and inorganic antimold agents including a photocatalyst containing a transition metal element.

The pressure loss measured when air is passed through the porous membrane at a flow rate of 5.3 cm/s is, for example, preferably less than 250 Pa, more preferably less than 200 Pa, and may be 30 Pa or more and 190 Pa or less. For example, in a case of a fluororesin porous membrane, the pressure loss of the porous membrane can be suppressed by increasing the amount of a liquid lubricant used in a production process, can be suppressed by increasing the drawing ratio, and can be suppressed by increasing the calender temperature.

(4) Porous membrane containing fluororesin

The porous membrane is preferably a fluororesin porous membrane that is a porous membrane containing a fluororesin. More specifically, the porous membrane preferably has a porous membrane structure mainly composed of a fluororesin and including fibrils (fibers, not illustrated) and nodes (nodal portions, not illustrated) connected to the fibrils. The term "mainly" means that, when a plurality of kinds of components are contained, the fluororesin is contained in the largest amount.

A component different from the fluororesin is, for example, an inorganic filler that is a non-fibrillatable non-melt-fabricable component (B component) described later.

The fluororesin used for the fluororesin porous membrane may be composed of one component, or may be composed of two or more components. Examples of the fluororesin composed of two or more components include a three-component mixture of a fibrillatable PTFE (hereinafter also referred to as an A component), the non-fibrillatable non-melt-fabricable component (hereinafter also referred to as a B component), and a non-fibrillatable melt-fabricable component having a melting point of less than 320°C (hereinafter also referred to as a C component). The fluororesin porous membrane preferably includes a combination of these three components. The fluororesin porous membrane composed of these three components has a membrane structure with a higher porosity and a larger thickness than fibrillatable PTFE (high-molecular-weight PTFE) porous membranes. Therefore, fine particles in gas can be collected in a large region of the filter medium in the thickness direction, which can improve the dust-holding capacity. By forming the porous membrane from these three components, the dust-holding capacity of liquid particles can be particularly increased rather than that of solid particles.

Hereafter, the above three components will be described in more detail.

(4-1) A component: fibrillatable PTFE

The fibrillatable PTFE is, for example, a high-molecular-weight PTFE obtained through emulsion polymerization or suspension polymerization of tetrafluoroethylene (TFE). The high molecular weight herein is a molecular weight at which fibrillation is easily caused and fibrils having a large fiber length are obtained during drawing in the production of a porous membrane, the standard specific gravity (SSG) is 2.130 to 2.230, and the melt flow substantially does not occur because of the high melt viscosity. The SSG of the fibrillatable PTFE is preferably 2.130 to 2.190 and more preferably 2.140 to 2.170 from the viewpoint of achieving ease of fibrillation and providing fibrils having a large fiber length. An excessively high SSG may deteriorate the drawability of the mixture of the A to C components. An excessively low SSG deteriorates the rollability and thus deteriorates the uniformity of the porous membrane, which may increase the pressure loss of the porous membrane. From the viewpoint of achieving ease of fibrillation and providing fibrils having a large fiber length, a PTFE obtained through emulsion polymerization is preferred. The standard specific gravity (SSG) is measured in conformity to ASTM D 4895.

The presence or absence of fibrillability, that is, whether fibrillation is achieved or not can be judged by checking whether paste extrusion, which is a typical method for molding a high-molecular-weight PTFE powder obtained from a polymer of TFE, can be performed or not. Normally, paste extrusion can be performed because a high-molecular-weight PTFE has fibrillability. In the case where an unfired molded body obtained through paste extrusion substantially does not have strength or elongation, such as the case where the molded body has an elongation of 0% and is broken when stretched, such a molded body can be considered to have no fibrillability.

The high-molecular-weight PTFE may be a modified polytetrafluoroethylene (hereafter referred to as a modified PTFE), a homo-polytetrafluoroethylene (hereafter referred to as a homo-PTFE), or a mixture of a modified PTFE and a homo-PTFE. Non-limiting examples of the homo-PTFE that can be suitably used include homo-PTFEs disclosed in Japanese Unexamined Patent Application Publication No. 53-60979, Japanese Unexamined Patent Application Publication No. 57-135, Japanese Unexamined Patent Application Publication No. 61-16907, Japanese Unexamined Patent Application Publication No. 62-104816, Japanese Unexamined Patent Application Publication No. 62-190206, Japanese Unexamined Patent Application Publication No. 63-137906, Japanese Unexamined Patent Application Publication No. 2000-143727, Japanese Unexamined Patent Application Publication No. 2002-201217, International Publication No. 2007/046345, International Publication No. 2007/119829, International Publication No. 2009/001894, International Publication No. 2010/113950, and International Publication No. 2013/027850. In particular, homo-PTFEs disclosed in Japanese Unexamined Patent Application Publication No. 57-135, Japanese Unexamined Patent Application Publication No. 63-137906, Japanese Unexamined Patent Application Publication No. 2000-143727, Japanese Unexamined Patent Application Publication No. 2002-201217, International Publication No. 2007/046345, International Publication No. 2007/119829, and International Publication No. 2010/113950 are preferred from the viewpoint of high drawability.

The modified PTFE is constituted by TFE and a monomer other than TFE (hereafter referred to as a modifying monomer). Non-limiting examples of the modified PTFE include PTFEs homogeneously modified by the modifying monomer, PTFEs modified at the beginning of polymerization reaction, and PTFEs modified at the end of polymerization reaction. Examples of the modified PTFE that can be suitably used include modified PTFEs disclosed in Japanese Unexamined Patent Application Publication No. 60-42446, Japanese Unexamined Patent Application Publication No. 61-16907, Japanese Unexamined Patent Application Publication No. 62-104816, Japanese Unexamined Patent Application Publication No. 62-190206, Japanese Unexamined Patent Application Publication No. 64-1711, Japanese Unexamined Patent Application Publication No. 2-261810, Japanese Unexamined Patent Application Publication No. 11-240917, Japanese Unexamined Patent Application Publication No. 11-240918, International Publication No. 2003/033555, International Publication No. 2005/061567, International Publication No. 2007/005361, International Publication No. 2011/055824, and International Publication No. 2013/027850. In particular, modified PTFEs disclosed in Japanese Unexamined Patent Application Publication No. 61-16907, Japanese Unexamined Patent Application Publication No. 62-104816, Japanese Unexamined Patent Application Publication No. 64-1711, Japanese Unexamined Patent Application Publication No. 11-240917, International Publication No. 2003/033555, International Publication No. 2005/061567, International Publication No. 2007/005361, and International Publication No. 2011/055824 are preferred from the viewpoint of high drawability.

The modified PTFE contains a TFE unit based on TFE and a modifying monomer unit based on the modifying monomer. The modifying monomer unit is a moiety in a molecular structure of the modified PTFE, the moiety being derived from the modifying monomer. The content of the modifying monomer unit in all monomer units of the modified PTFE is preferably 0.001 to 0.500 wt% and more preferably 0.01 to 0.30 wt%. All monomer units are moieties derived from the respective monomers in a molecular structure of the modified PTFE.

The modifying monomer is not limited as long as the modifying monomer is copolymerizable with TFE. Examples of the modifying monomer include perfluoroolefins such as hexafluoropropylene (HFP); chlorofluoroolefins such as chlorotrifluoroethylene (CTFE); hydrogen-containing fluoroolefins such as trifluoroethylene and vinylidene fluoride (VDF); perfluorovinyl ethers; and (perfluoroalkyl)ethylenes (PFAE) and ethylene. A single modifying monomer may be used or a plurality of modifying monomers may be used.

The perfluorovinyl ethers are not limited. For example, an unsaturated perfluoro compound represented by general formula (1) below can be used.

$$CF_2=CF-ORf \cdots \qquad (1)$$

In the formula, Rf represents a perfluoro organic group.

In this specification, the perfluoro organic group is an organic group obtained by substituting all hydrogen atoms bonding to carbon atoms with fluorine atoms. The perfluoro organic group may contain ether oxygen.

An example of the perfluorovinyl ether is a perfluoro(alkyl vinyl ether) (PAVE) with Rf representing a perfluoroalkyl group having 1 to 10 carbon atoms in the general formula (1). The perfluoroalkyl group preferably has 1 to 5 carbon atoms. Examples of the perfluoroalkyl group in PAVE include a perfluoromethyl group, a perfluoroethyl group, a perfluoropropyl group, a perfluorobutyl group, a perfluoropentyl group, and a perfluorohexyl group. The PAVE is preferably perfluoro(propyl vinyl ether) (PPVE) or perfluoro(methyl vinyl ether) (PMVE).

The perfluoroalkyl ethylene (PFAE) is not limited, and examples thereof include perfluorobutyl ethylene (PFBE) and perfluorohexyl ethylene (PFHE).

The modifying monomer in the modified PTFE is preferably at least one monomer selected from the group consisting of HFP, CTFE, VDF, PAVE, PFAE, and ethylene.

From the viewpoint of achieving ease of fibrillation and providing fibrils having a large fiber length, the content of the homo-PTFE is preferably more than 50 wt% of the fibrillatable PTFE.

The fibrillatable PTFE may be a combination of a plurality of the above-described components.

From the viewpoint of maintaining the fibrous structure of the porous membrane, the content of the fibrillatable PTFE is preferably more than 50 wt% of the porous membrane.

(4-2) B component: non-fibrillatable non-melt-fabricable component

The non-fibrillatable non-melt-fabricable component is mainly unevenly distributed in the nodal portions as non-fibrous particles and has a function of suppressing fibrillation of the fibrillatable PTFE.

Examples of the non-fibrillatable non-melt-fabricable component include components having thermoplasticity, such as low-molecular-weight PTFEs; thermosetting resins; inorganic fillers; and mixtures of the foregoing.

The component having thermoplasticity preferably has a melting point of 320°C or higher and has as high a melt viscosity as possible. For example, the low-molecular-weight PTFE has a high melt viscosity and therefore can remain in the nodal portions even when processed at a temperature higher than or equal to the melting point. In this specification, the low-molecular-weight PTFE is a PTFE having a number-average molecular weight of 600,000 or less, a melting point of 320°C or higher and 335°C or lower, and a melt viscosity at 380°C of 100 Pa·s to $7.0 \times 10^5$ Pa·s (refer to Japanese Unexamined Patent Application Publication No. 10-147617).

Examples of the method for producing a low-molecular-weight PTFE include a method in which a high-molecular-weight PTFE powder (molding powder) obtained through suspension polymerization of TFE or a high-molecular-weight PTFE powder (fine powder) obtained through emulsion polymerization of TFE and a particular fluoride are thermally decomposed by causing a catalytic reaction at high temperature (refer to Japanese Unexamined Patent Application Publication No. 61-162503), a method in which the high-molecular-weight PTFE powder or a molded body is irradiated with ionizing radiation (refer to Japanese Unexamined Patent Application Publication No. 48-78252), and a method in which TFE is directly polymerized together with a chain transfer agent (refer to, e.g., International Publication No. 2004/050727, International Publication No. 2009/020187, and International Publication No. 2010/114033). The low-molecular-weight PTFE may be a homo-PTFE or the above-described modified PTFE containing a modifying monomer as in the case of the fibrillatable PTFE.

The low-molecular-weight PTFE has no fibrillability. The presence or absence of fibrillability can be judged by the above-described method. For the low-molecular-weight PTFE, an unfired molded body obtained through paste extrusion substantially does not have strength or elongation, such as an elongation of 0%, and is broken when stretched.

The low-molecular-weight PTFE is not limited, but preferably has a melt viscosity at 380°C of 1000 Pa·s or more, more preferably 5000 Pa·s or more, and further preferably 10000 Pa·s or more. At a high melt viscosity, even if the non-fibrillatable melt-fabricable component serving as a C component is melted during production of the porous membrane, the non-fibrillatable non-melt-fabricable component can remain in the nodal portions, which can suppress the fibrillation.

Examples of the thermosetting resin include epoxy resin, silicone resin, polyester resin, polyurethane resin, polyimide resin, phenolic resin, and mixtures of the foregoing resins. The thermosetting resin is desirably an uncured resin dispersed in water from the viewpoint of workability of co-coagulation described later. Each of these thermosetting resins is commercially available.

Examples of the inorganic filler include talc, mica, calcium silicate, glass fiber, calcium carbonate, magnesium carbonate, carbon fiber, barium sulfate, calcium sulfate, and mixtures of the foregoing. In particular, talc is preferably used from the viewpoint of specific gravity and affinity for a fibrillatable high-molecular-weight PTFE. The inorganic filler preferably has a particle size of 3 $\mu$m or more and 20 $\mu$m or less from the viewpoint of formation of a stable dispersion body during production of the porous membrane. The particle size is an average particle size measured by a laser diffraction/-scattering method. Each of these inorganic fillers is commercially available.

The non-fibrillatable non-melt-fabricable component may contain the above-described components in a combined manner.

The content of the non-fibrillatable non-melt-fabricable component is preferably 1 wt% or more and 50 wt% or less of the porous membrane. When the content of the non-fibrillatable non-melt-fabricable component is 50 wt% or less, the fibrous structure of the porous membrane can be easily maintained. The content of the non-fibrillatable non-melt-fabricable component is preferably contained in an amount of 20 wt% or more and 40 wt% or less, and more preferably 30 wt%. When the content is 20 wt% or more and 40 wt% or less, fibrillation of the fibrillatable PTFE can be more effectively suppressed.

(4-3) C component: non-fibrillatable melt-fabricable component having a melting point of less than 320°C

The non-fibrillatable melt-fabricable component having a melting point of lower than 320°C (hereafter also referred to as a non-fibrillatable melt-fabricable component) has flowability when melted. Therefore, the non-fibrillatable melt-fabricable component can be melted during production (drawing) of the porous membrane and cured in the nodal portions. This increases the strength of the whole porous membrane and thus can suppress the deterioration of filter performance even if the porous membrane is compressed, for example, in the downstream processes.

The non-fibrillatable melt-fabricable component preferably has a melt viscosity of less than 10000 Pa·s at 380°C. The melting point of the non-fibrillatable melt-fabricable component is a temperature at a peak top of a heat-of-fusion curve obtained when the component is heated to a temperature higher than or equal to the melting point at a temperature-increasing rate of 10 °C/min to be completely melted once, cooled to a temperature lower than or equal to the melting point at 10 °C/min, and then heated again at 10 °C/min using a differential scanning calorimeter (DSC).

Examples of the non-fibrillatable melt-fabricable component include components that sufficiently exhibit meltability and flowability at a drawing temperature during production of the porous membrane, such as heat-meltable fluoropolymer, polystyrene resin, polyethylene terephthalate (PET) resin, polyester resin, polyamide resin, and mixtures of the foregoing resins. In particular, a heat-meltable fluoropolymer is preferred from the viewpoint of high heat resistance at a drawing temperature during production of the porous membrane and high chemical resistance. The heat-meltable fluoropolymer is a fluoropolymer having a copolymer unit derived from at least one fluorinated ethylenically unsaturated monomer, preferably two or more fluorinated ethylenically unsaturated monomers, represented by general formula (2) below.

$$RCF=CR_2 \cdots \qquad (2)$$

(In the formula, R are each independently selected from H, F, Cl, alkyl having 1 to 8 carbon atoms, aryl having 6 to 8 carbon atoms, cyclic alkyl having 3 to 10 carbon atoms, and perfluoroalkyl having 1 to 8 carbon atoms. In this case, all R may be the same, any two R may be the same and the remaining one R may be different from the two R, or all R may be different from each other.)

Non-limiting useful examples of the compound represented by the general formula (2) include perfluoroolefins such as fluoroethylene, VDF, trifluoroethylene, TFE, and HFP; chlorofluoroolefins such as CTFE and dichlorodifluoroethylene; (perfluoroalkyl)ethylenes such as PFBE and PFHE; perfluoro-1,3-dioxole; and mixtures of the foregoing.

The fluoropolymer may also include a copolymer derived from copolymerization of at least one monomer represented by the above general formula (2) and at least one copolymerizable comonomer represented by the above general formula (1) and/or general formula (3) below.

$$R_2C=CR_2 \cdots \qquad (3)$$

(In the formula, R are each independently selected from H, Cl, an alkyl group having 1 to 8 carbon atoms, an aryl group having 6 to 8 carbon atoms, and a cyclic alkyl group having 3 to 10 carbon atoms. In this case, all R may be the same, any two or more R may be the same and the remaining R may be different from the two or more R, or all R may be different from each other. If the remaining R are plural R, the plural R may be different from each other.)

A useful example of the compound represented by the general formula (1) is a perfluoro(alkyl vinyl ether) (PAVE). The PAVE is preferably perfluoro(propyl vinyl ether) (PPVE) or perfluoro(methyl vinyl ether) (PMVE).

Useful examples of the compound represented by the general formula (3) include ethylene and propylene.

More specific examples of the fluoropolymer include polyfluoroethylene derived from polymerization of fluoroethylene, polyvinylidene fluoride (PVDF) derived from polymerization of vinylidene fluoride (VDF), polychlorotrifluoroethylene (PCTFE) derived from polymerization of chlorotrifluoroethylene (CTFE), a fluoropolymer derived from copolymerization of two or more different monomers represented by the general formula (2), and a fluoropolymer derived from copolymerization of at least one monomer represented by the general formula (2) and at least one monomer represented by the general formula (1) and/or at least one monomer represented by the general formula (3).

Examples of the fluoropolymer include polymers having a copolymer unit derived from VDF and hexafluoropropylene (HFP) and polymers derived from TFE and at least one copolymerizable comonomer (at least three wt%) other than TFE. Examples of the latter fluoropolymer include TFE/PAVE copolymers (PFA), TFE/PAVE/CTFE copolymers, TFE/HFP copolymers (FEP), TFE/ethylene copolymers (ETFE), TFE/HFP/ethylene copolymers (EFEP), TFE/VDF copolymers, TFE/VDF/HFP copolymers, TFE/VDF/CTFE copolymers, and mixtures of the foregoing copolymers.

The non-fibrillatable melt-fabricable component may contain the above-described components in a combined manner.

The content of the non-fibrillatable melt-fabricable component in the porous membrane is preferably 0.1 wt% or more and less than 20 wt%. When the content is less than 20 wt%, the non-fibrillatable melt-fabricable component is dispersed also in portions other than the nodal portions in the porous membrane to suppress an increase in pressure loss of the porous membrane. When the content is less than 20 wt%, drawing is easily performed at a high area drawing ratio of 40 times or more, which will be described later. When the content of the non-fibrillatable melt-fabricable component in the porous membrane is 0.1 wt% or more, the deterioration of filter performance of the porous membrane can be sufficiently easily suppressed even if a compressive force and the like are applied in the downstream processes. The content of the non-fibrillatable melt-fabricable component in the porous membrane is preferably 15 wt% or less and more preferably 10 wt% or less. From the viewpoint of ensuring the strength of the porous membrane, the content of the non-fibrillatable melt-fabricable component in the porous membrane is preferably 0.5 wt% or more. The content is particularly preferably about 5 wt%.

The content of the non-fibrillatable melt-fabricable component is preferably 10 wt% or less to satisfactorily perform drawing at an area drawing ratio of 40 times or more and 800 times or less.

In the porous membrane composed of the above-described three components, the fibrils are mainly composed of the A component, and the nodal portions are composed of the components A to C. Such nodal portions are formed relatively large in the porous membrane, thereby forming a porous membrane having a large thickness. Furthermore, since such nodal portions contain the non-fibrillatable melt-fabricable component, the nodal portions are relatively hard and serve as columns that support the porous membrane in the thickness direction. Therefore, even when the porous membrane receives a compressive force and the like in the thickness direction in the downstream processes, such as stacking of the air-permeable support member or pleating described later, it is possible to suppress the reduction in filter performance of the porous membrane.

(4-4) Other properties of porous membrane

In the fluororesin porous membrane, the fiber diameter (average fiber diameter) is preferably 50 nm or more and 250 nm or less and more preferably 60 nm or more and 200 nm or less. Furthermore, a first fluororesin porous membrane disposed on the upstream side of air flow relative to a second fluororesin porous membrane preferably has a larger fiber diameter than the second fluororesin porous membrane.

The above-described fluororesin porous membrane is not limited, but may be produced, for example, with reference to a production method described in Japanese Unexamined Patent Application Publication No. 2017-159281.

(5) Air-permeable support member

Even if it is difficult to independently use the porous membrane because of its small thickness or the like, the air-permeable support member supports the porous membrane to allow the independent use of the porous membrane.

The material and structure of the air-permeable support member are not limited, and examples thereof include a nonwoven fabric, a woven fabric, a metal mesh, and a resin net. In particular, a nonwoven fabric having heat fusibility is preferred from the viewpoint of strength, collectability, flexibility, and workability. The nonwoven fabric is preferably a nonwoven fabric in which some or all of constituent fibers have a core/sheath structure, a two-layer nonwoven fabric including a fiber layer formed of a low-melting-point material and a fiber layer formed of a high-melting-point material, or a nonwoven fabric whose surface is coated with a heat fusible resin. Such a nonwoven fabric is, for example, a spun-bonded nonwoven fabric. The nonwoven fabric having a core/sheath structure is preferably a nonwoven fabric in which the core component has a higher melting point than the sheath component. Examples of the combination of materials for the core/sheath include PET/PE and high-melting-point polyester/low-melting-point polyester. Examples of the combination of the low-melting-point material/high-melting-point material of the two-layer nonwoven fabric include PE/PET, PP/PET, PBT/PET, and low-melting-point PET/high-melting-point PET. Examples of the nonwoven fabric whose surface is coated with a heat fusible resin include a PET nonwoven fabric whose surface is coated with EVA (ethylene-vinyl acetate copolymer resin) and a PET nonwoven fabric whose surface is coated with an olefin resin.

Non-limiting examples of the material for the nonwoven fabric include polyolefins (e.g., PE and PP), polyamides, polyesters (e.g., PET), aromatic polyamides, and composite materials of the foregoing.

The air-permeable support member can be bonded to the porous membrane by utilizing an anchor effect due to partial melting of the air-permeable support member through heating or due to melting of a hot-melt resin, or by utilizing adhesion using a reactive adhesive or the like.

The air-permeable support member has a pressure loss, a collection efficiency, and a dust holding capacity much lower than those of the above-described porous membrane. The pressure loss and the collection efficiency of the air-permeable support member may be 5% or less of those of the porous membrane and may be values considered to be substantially zero.

The pressure loss of the air-permeable support member is, for example, preferably 10 Pa or less and more preferably 5 Pa or less. The collection efficiency of the air-permeable support member for NaCl having a particle size of 0.1 $\mu$m may be, for example, a value considered to be substantially zero or about zero.

The thickness of the air-permeable support member is, for example, preferably 0.3 mm or less and more preferably 0.25 mm or less.

The basis weight of the air-permeable support member is, for example, preferably 20 g/m$^2$ or more and 50 g/m$^2$ or less.

Since the above air-permeable support member has very large openings and poor water retention, the mold-resistant performance of the mold-resistant air filter medium substantially depends on mold-resistant properties of the porous membrane.

(6) Pre-collection member

The mold-resistant air filter medium may include a pre-collection member that is disposed on the upstream side relative to the porous membrane and collects a part of dust in air flow.

From the viewpoint of suppressing the pressure loss of the entire mold-resistant air filter medium, the pressure loss of the pre-collection member is preferably 5 Pa or more and less than 55 Pa and more preferably 15 Pa or more and less than 45 Pa when air is passed at a flow rate of 5.3 cm/s.

The collection efficiency of the pre-collection member for NaCl having a particle size of 0.3 $\mu$m is preferably 15% or more and less than 85% and more preferably 30% or more and less than 75%.

From the viewpoint of facilitating a folding process performed when the air filter medium is folded into pleats, the thickness of the pre-collection member is preferably 0.8 mm or less, more preferably 0.7 mm or less, and may be less than 0.4 mm. The thickness of the pre-collection member is not limited, but may be, for example, 0.1 mm or more.

The average fiber diameter of the pre-collection member is 0.8 $\mu$m or more and less than 2.0 $\mu$m.

The basis weight of the pre-collection member is not limited, but can be, for example, 10 g/m$^2$ or more and 70 g/m$^2$ or less and is preferably 30 g/m$^2$ or more and 67 g/m$^2$ or less.

Such a pre-collection member is not limited, and may be a glass fiber filter medium or may be a nonwoven fabric or a fiber layer structural body formed of a fiber material produced by one of a melt-blowing process, an electrospinning process, a sea-island process, and a hybrid process of the foregoing. The hybrid process includes, for example, a melt spinning process or an electret blowing process. The sea-island process is a process in which, for example, when a fiber is produced by performing discharge from a plurality of discharge outlets, different raw materials are used for different discharge paths, and one raw material constitutes a sea portion and the other raw material constitutes island portions so that the cross-section of the fiber has a sea-island structure. Herein, two polymers or a plurality of polymers for sea and islands are spun and the polymer for sea is melted in the downstream process to leave the island portions, thereby producing a fiber. The combination of the different raw materials for different discharge paths allows adjustment of, for example, bulk density and stretchability. In the melt-blowing process, yarn is formed by discharging a molten polymer from a nozzle using an extruder while blowing heated air along the nozzle. By adjusting, for example, the amount of polymer discharged from the nozzle per unit time and the blowing rate of heated air, a yarn having a smaller diameter can be obtained. The physical properties of the yarn can also be changed by adjusting the melt viscosity of a polymer used. Examples of the material used when the pre-collection member is produced by one of a melt-blowing process, an electrospinning process, a sea-island process, and a hybrid process of the foregoing include polyethylene (PE), polypropylene (PP), polyethylene terephthalate (PET), polybutylene terephthalate (PBT), polyamide (PA), polyacrylonitrile (PAN), polyvinylidene fluoride (PVdF), polyvinyl alcohol (PVA), polyurethane (PU), and mixtures of the foregoing.

(7) Example of applications

The mold-resistant air filter medium is used for, for example, the following applications:

fields of, for example, ULPA filters (ultra low penetration air filters) (for producing semiconductors), HEPA filters (for hospitals and for producing semiconductors), cylindrical cartridge filters (for industrial use), bag filters (for industrial use), heat-resistant bag filters (for treating exhaust gas), heat-resistant pleated filters (for treating exhaust gas), SINBRAN (registered trademark) filters (for industrial use), catalyst filters (for treating exhaust gas), adsorbent-including filters (for installation in HDD), adsorbent-including vent filters (for installation in HDD), vent filters (e.g., for installation in HDD), filters for vacuum cleaners (for vacuum cleaners), general-purpose multilayered felt materials, cartridge filters for gas turbines (interchangeable components for gas turbines), and cooling filters (for casings of electronic devices);

fields of materials for freeze-drying such as freeze-drying bottles, automobile ventilation materials for electronic circuits and lamps, bottle applications such as bottle caps, protective ventilation for electronic devices, and ventilation/internal pressure regulation such as medical ventilation; and

liquid filtration fields of, for example, semiconductor liquid filtration filters (for producing semiconductors), hydrophilic filters (for producing semiconductors), filters for chemicals (for treating chemical solutions), filters for pure water production lines (for producing pure water), and backwash liquid filtration filters (for treating industrial wastewater).

The mold-resistant air filter medium is preferably used particularly in any of a food factory, a pharmaceutical factory, a clean room, and an air cleaner.

The mold-resistant air filter medium more easily exhibits its effect when used in an environment in which occurrence of mold is particularly of concern. For example, the mold-resistant air filter medium is preferably used in an environment having a relative humidity of 60% or more, more preferably in an environment having a temperature of 20 degrees or more and a relative humidity of 60% or more, and further preferably in an environment having a temperature of 25 degrees or more and a relative humidity of 70% or more.

(8) Filter pack

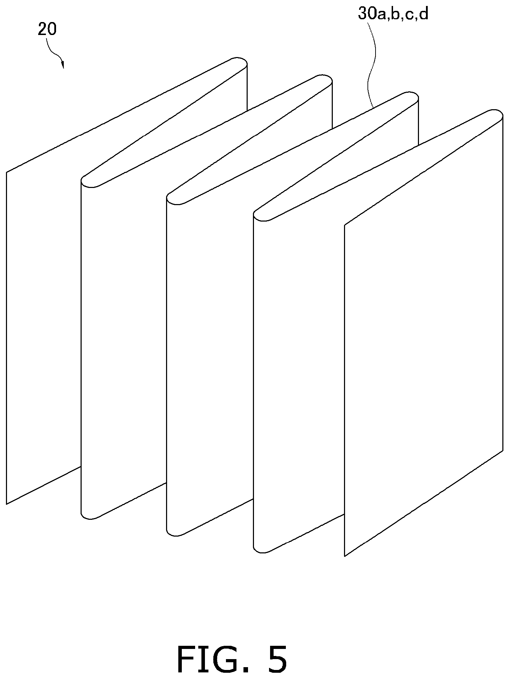

Next, a filter pack will be described with reference to Fig. 5.

Fig. 5 is an external perspective view of a filter pack 20.

The filter pack 20 includes the above-described mold-resistant air filter medium (for example, mold-resistant air filter media 30a to 30d). The mold-resistant air filter medium of the filter pack 20 is a filter medium that has been processed so as to have a zigzag shape in which mountain folds and valley folds are alternately repeated (pleating). The pleating can be performed using, for example, a rotary folding machine. The folding width of the filter medium is not limited, and is, for example, 25 mm or more and 280 mm or less. By performing pleating, the folding area of the filter medium can be increased in the case where the filter pack 20 is used for an air filter unit. Thus, an air filter unit having high collection efficiency can be obtained.

The filter pack 20 may further include, in addition to the mold-resistant air filter medium, spacers (not illustrated) for keeping pleat spacing when used for an air filter unit. The material for the spacers is not limited, and is preferably a hot-melt resin.

(9) Air filter unit

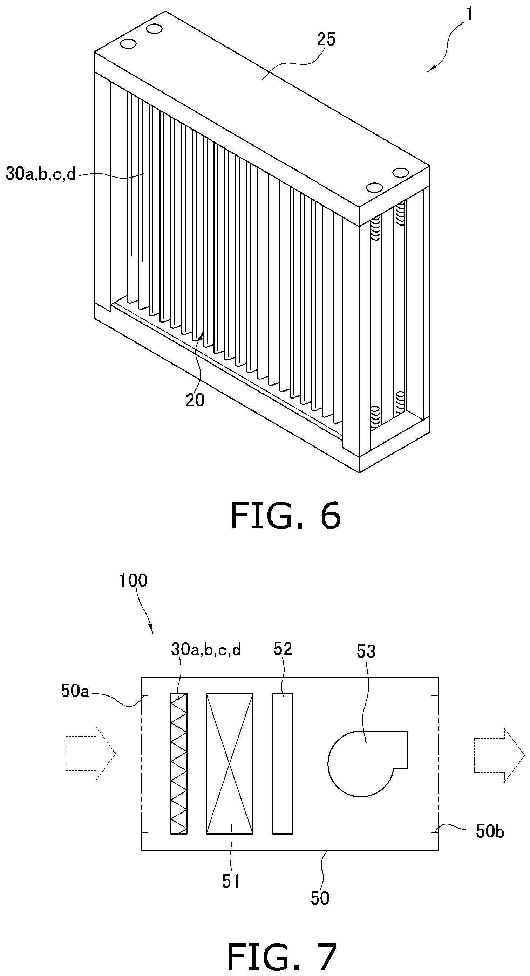

Next, an air filter unit 1 will be described with reference to Fig. 6.

Fig. 6 is an external perspective view of the air filter unit 1.

The air filter unit 1 includes the above-described mold-resistant air filter medium or filter pack, and a frame body 25 that holds the mold-resistant air filter medium or the filter pack. In other words, the air filter unit may be produced such that a mold-resistant air filter medium not subjected to mountain folds or valley folds is held by the frame body or such that the filter pack 20 is held by the frame body 25. The air filter unit 1 illustrated in Fig. 6 is produced using the filter pack 20 and the frame body 25.

The frame body 25 is produced by, for example, assembling boards or forming a resin, and the filter pack 20 and the frame body 25 are preferably sealed with each other using a sealer. The sealer is used to prevent leakage between the filter pack 20 and the frame body 25 and is formed of, for example, a resin such as an epoxy resin, an acrylic resin, or a urethane resin.

The air filter unit 1 including the filter pack 20 and the frame body 25 may be a mini-pleat air filter unit in which a single filter pack 20 extending in a flat-plate form is held so as to be accommodated inside the frame body 25 or may be a V-bank air filter unit or a single header air filter unit in which a plurality of filter packs extending in a flat-plate form are arranged and held in the frame body.

(10) Air treatment apparatus

Next, an air treatment apparatus 100 will be described with reference to Fig. 7.

Fig. 7 is an external perspective view of the air treatment apparatus 100.

The air treatment apparatus 100 includes the above-described mold-resistant air filter medium (for example, mold-resistant air filter media 30a to 30d), a casing 50, a heat exchanger 51, a humidity adjuster 52, and a fan 53.

The casing 50 has an intake port 50a and a blowout port 50b, and accommodates therein the mold-resistant air filter media 30a to 30d, the heat exchanger 51, the humidity adjuster 52, and the fan 53. The mold-resistant air filter media 30a to 30d, the heat exchanger 51, the humidity adjuster 52, and the fan 53 are arranged in this order from the intake port 50a toward the blowout port 50b.

The heat exchanger 51 constitutes a part of a refrigerant circuit (not illustrated), and a refrigerant flows inside the heat exchanger 51. Air that has passed through the mold-resistant air filter media 30a to 30d is heated or cooled when passing through the heat exchanger 51.

The humidity adjuster 52 is not limited and may include, for example, a rotor provided with an adsorption element. The adsorption element may have a temperature dependence in moisture adsorption capacity and may desorb the adsorbed moisture by being heated. In this case, a controllable heater is used together with the adsorption element.

The above air treatment apparatus 100 may be used as an outdoor air treatment apparatus in which the intake port 50a of the casing 50 is opened to the outside and the blowout port 50b of the casing 50 is opened to the inside of a building.

Examples

The present disclosure will be specifically described below based on Examples and Comparative Examples.

(Example 1)

For a mold-resistant air filter medium of Example 1, a mold-resistant air filter medium having a structure illustrated in Fig. 3 was prepared.

Specifically, an upstream air-permeable support member 21a and a downstream air-permeable support member 21b were each a spun-bonded nonwoven fabric (average fiber diameter: 20 $\mu$m, basis weight: 40 g/m$^2$, thickness: 0.2 mm) formed of fibers having a core/sheath structure in which PET was used for the core and PE was used for the sheath. A first porous membrane 31a disposed on the upstream side of air flow passing through the filter medium and a second porous membrane 31b disposed on the downstream side were obtained through the following steps.

That is, 66.5 wt% (in terms of polymer) of a PTFE aqueous dispersion body (PTFE-A) having an SSG of 2.160, 28.5 wt% (in terms of polymer) of a low-molecular-weight PTFE aqueous dispersion body (PTFE-B) having a melt viscosity of 20000 Pa·s as measured by a flow tester method at 380°C, and 5 wt% (in terms of polymer) of an FEP aqueous dispersion body having a melting point of 215°C were mixed with each other. As a coagulant, 500 ml of a 1% aqueous aluminum nitrate solution was added thereto, and stirring was performed to cause co-coagulation. The resulting powder was strained through a strainer to remove water and then further dried in a hot-air drying furnace at 135°C for 18 hours to obtain a mixed powder of the above three components.

Subsequently, 36 parts by weight of a hydrocarbon oil ("IP Solvent 2028" manufactured by Idemitsu Kosan Co., Ltd.) serving as a liquid lubricant (extrusion aid) was added to and mixed with 100 parts by weight of the mixed powder at 20°C. Then, the resulting mixture was extruded using a paste extruder to obtain a sheet-shaped molded body. A sheet die having a rectangular extrusion outlet with a short-side length of 2 mm and a long-side length of 180 mm was attached to a tip portion of the paste extruder. The sheet-shaped molded body was molded into a film using a calender roll heated to 70°C to obtain a fluororesin film. The resulting film was passed through a hot-air drying furnace at 200°C to evaporate and remove the hydrocarbon oil, thereby obtaining a belt-shaped unfired fluororesin film (first green tape) having an average thickness of 300 $\mu$m and an average width of 180 mm. A belt-shaped unfired fluororesin film (second green tape) having an average thickness of 300 $\mu$m and an average width of 180 mm was obtained in the same manner as the first green tape, except that the amount of the liquid lubricant mixed was set to 34 parts by weight.

Subsequently, the first green tape and the second green tape were stacked and drawn in a longitudinal direction (lengthwise direction) at a drawing ratio of 6.5 times. The drawing temperature was 280°C. Then, the stacked and drawn green tapes were drawn in a width direction (transverse direction) at a drawing ratio of 12.0 times using a tenter capable of continuous clipping, and heat setting was performed. At this time, the drawing temperature was 290°C, and the heat setting temperature was 390°C. Thus, a multilayer porous membrane in which the first porous membrane and the second porous membrane were stacked was obtained. Then, the upstream air-permeable support member 21a and the downstream air-permeable support member 21b were bonded to both sides (outer layers) of the obtained two-layer porous membrane by thermal fusion using a laminating apparatus, thereby obtaining a four-layer structure filter medium illustrated in Fig. 3.

(Example 2)

For a mold-resistant air filter medium of Example 2, a mold-resistant air filter medium having a structure illustrated in Fig. 3 was prepared.

Specifically, the same upstream air-permeable support member 21a and downstream air-permeable support member 21b as in Example 1 were used in Example 2. A first porous membrane 31a disposed on the upstream side of air flow passing through the filter medium and a second porous membrane 31b disposed on the downstream side were obtained through the following steps.

That is, 66.5 wt% (in terms of polymer) of a PTFE aqueous dispersion body (PTFE-A) having an SSG of 2.160, 28.5 wt% (in terms of polymer) of a low-molecular-weight PTFE aqueous dispersion body (PTFE-B) having a melt viscosity of 20000 Pa·s as measured by a flow tester method at 380°C, and 5 wt% (in terms of polymer) of an FEP aqueous dispersion body having a melting point of 215°C were mixed with each other. As a coagulant, 500 ml of a 1% aqueous aluminum nitrate solution was added thereto, and stirring was performed to cause co-coagulation. The resulting powder was strained through a strainer to remove water and then further dried in a hot-air drying furnace at 135°C for 18 hours to obtain a mixed powder of the above three components.

Subsequently, 33.5 parts by weight of a hydrocarbon oil ("IP Solvent 2028" manufactured by Idemitsu Kosan Co., Ltd.) serving as a liquid lubricant (extrusion aid) was added to and mixed with 100 parts by weight of the mixed powder at 20°C. Then, the resulting mixture was extruded using a paste extruder to obtain a sheet-shaped molded body. A sheet die having a rectangular extrusion outlet with a short-side length of 2 mm and a long-side length of 180 mm was attached to a tip portion of the paste extruder. The sheet-shaped molded body was molded into a film using a calender roll heated to 70°C to obtain a fluororesin film. The resulting film was passed through a hot-air drying furnace at 200°C to evaporate and remove the hydrocarbon oil, thereby obtaining a belt-shaped unfired fluororesin film (first green tape) having an average thickness of 300 μm and an average width of 180 mm. A belt-shaped unfired fluororesin film (second green tape) having an average thickness of 300 μm and an average width of 180 mm was obtained in the same manner as the first green tape, except that the amount of the liquid lubricant mixed was set to 30 parts by weight.

Subsequently, the first green tape and the second green tape were stacked and drawn in a longitudinal direction (lengthwise direction) at a drawing ratio of 6.5 times. The drawing temperature was 280°C. Then, the stacked and drawn green tapes were drawn in a width direction (transverse direction) at a drawing ratio of 13.7 times using a tenter capable of continuous clipping, and heat setting was performed. At this time, the drawing temperature was 290°C, and the heat setting temperature was 390°C. Thus, a multilayer porous membrane in which the first porous membrane and the second porous membrane were stacked was obtained. Then, the upstream air-permeable support member 21a and the downstream air-permeable support member 21b were bonded to both sides (outer layers) of the obtained two-layer porous membrane by thermal fusion using a laminating apparatus, thereby obtaining a four-layer structure filter medium illustrated in Fig. 3.

(Example 3)

For a mold-resistant air filter medium of Example 3, a mold-resistant air filter medium having a structure illustrated in Fig. 3 was prepared.

The same upstream air-permeable support member 21a and downstream air-permeable support member 21b as in Example 1 were used in Example 3. A first porous membrane 31a disposed on the upstream side of air flow passing through the filter medium and a second porous membrane 31b disposed on the downstream side were obtained through the following steps.

In Example 3, the raw material used was a mixed powder that was obtained by co-coagulation mixing, at a weight ratio of 75:25, a fine powder of a perfluoroalkyl vinyl ether-modified polytetrafluoroethylene, which is a copolymer of tetrafluoroethylene and perfluoroalkyl vinyl ether, and a fine powder of polytetrafluoroethylene having an average molecular weight of 6,500,000 (manufactured by Daikin Industries, Ltd., trade name: F106).

A belt-shaped unfired fluororesin film (first green tape) having an average thickness of 300 μm and an average width of 170 mm was obtained by the same method as in Example 1, except that a mixture obtained by mixing an extrusion aid (liquid lubricant) in an amount of 29% by weight based on the weight of the mixed powder was used, and a sheet die having a rectangular extrusion outlet with a short-side length of 2 mm and a long-side length of 170 mm was attached.

A belt-shaped unfired fluororesin film (second green tape) having an average thickness of 300 μm and an average width of 170 mm was obtained by the same method as in Example 1, except that a mixture obtained by mixing an extrusion aid (liquid lubricant) in an amount of 24% by weight based on the weight of the mixed powder was used.

The first green tape and the second green tape were stacked and drawn in a longitudinal direction (lengthwise direction) at a drawing ratio of 8 times. The drawing temperature was 250°C. Then, the stacked and drawn green tapes were drawn in a width direction (transverse direction) at a drawing ratio of 20.0 times using a tenter capable of continuous clipping, and heat setting was performed. At this time, the drawing temperature was 290°C, and the heat setting temperature was 390°C. Thus, a multilayer porous membrane in which the first porous membrane and the second porous membrane were stacked was obtained. Then, the upstream air-permeable support member 21a and the downstream air-permeable support member 21b were bonded to both sides (outer layers) of the obtained two-layer porous membrane by thermal fusion using a laminating apparatus, thereby obtaining a four-layer structure filter medium illustrated in Fig. 3.

(Example 4)

For a mold-resistant air filter medium of Example 4, a mold-resistant air filter medium having a structure illustrated in Fig. 3 was prepared.

The same upstream air-permeable support member 21a and downstream air-permeable support member 21b as in Example 1 were used in Example 4. A first porous membrane 31a disposed on the upstream side of air flow passing through the filter medium and a second porous membrane 31b disposed on the downstream side were obtained through the following steps.

In Example 4, the raw material used was a mixed powder that was obtained by co-coagulation mixing, at a weight ratio of 75:25, a fine powder of a perfluoroalkyl vinyl ether-modified polytetrafluoroethylene, which is a copolymer of tetrafluoroethylene and perfluoroalkyl vinyl ether, and a fine powder of polytetrafluoroethylene having an average molecular weight of 6,500,000 (manufactured by Daikin Industries, Ltd., trade name: F106).

A belt-shaped unfired fluororesin film (first green tape) having an average thickness of 300 μm and an average width of 180 mm was obtained by the same method as in Example 1, except that a mixture obtained by mixing an extrusion aid (liquid lubricant) in an amount of 28% by weight based on the weight of the mixed powder was used.

A belt-shaped unfired fluororesin film (second green tape) having an average thickness of 300 μm and an average width of 180 mm was obtained by the same method as in Example 1, except that a mixture obtained by mixing an extrusion aid (liquid lubricant) in an amount of 24% by weight based on the weight of the mixed powder was used.

The first green tape and the second green tape were stacked and drawn in a longitudinal direction (lengthwise direction) at a drawing ratio of 8 times. The drawing temperature was 280°C. Then, the stacked and drawn green tapes were drawn in a width direction (transverse direction) at a drawing ratio of 22.0 times using a tenter capable of continuous clipping, and heat setting was performed. At this time, the drawing temperature was 290°C, and the heat setting temperature was 390°C. Thus, a multilayer porous membrane in which the first porous membrane and the second porous membrane were stacked was obtained. Then, the upstream air-permeable support member 21a and the downstream air-permeable support member 21b were bonded to both sides (outer layers) of the obtained two-layer porous membrane by thermal fusion using a laminating apparatus, thereby obtaining a four-layer structure filter medium illustrated in Fig. 3.

(Example 5)

For a mold-resistant air filter medium of Example 5, a mold-resistant air filter medium having a structure illustrated in Fig. 2 was prepared.

The same upstream air-permeable support member 21a and downstream air-permeable support member 21b as in Example 1 were used in Example 5.

A porous membrane 31 was obtained through the following steps.

In Example 5, the raw material used was a fine powder of polytetrafluoroethylene having an average molecular weight of 6,500,000 (manufactured by Daikin Industries, Ltd., trade name: F106). A mixture obtained by mixing 33 parts by weight of a liquid lubricant relative to 100 parts by weight of the PTFE fine powder was extruded using a paste extruder to obtain a round bar-shaped molded body. The round bar-shaped molded body was formed into a film using a calender roll heated to 70°C to obtain a PTFE film. The resulting film was passed through a hot-air drying furnace at 200°C to evaporate and remove the hydrocarbon oil, thereby obtaining a belt-shaped unfired PTFE film having an average thickness of 200 μm and an average width of 150 mm. The unfired PTFE film was drawn in a longitudinal direction at a drawing ratio of 6.5 times. The drawing temperature was 280°C. Then, the drawn unfired PTFE film was drawn in a width direction at a drawing ratio of 32.0 times using a tenter capable of continuous clipping, and heat setting was performed. At this time, the drawing temperature was 290°C, and the heat setting temperature was 390°C. The upstream air-permeable support member 21a and the downstream air-permeable support member 21b were bonded to both sides (outer layers) of the thus-obtained porous membrane by thermal fusion using a laminating apparatus, thereby obtaining a three-layer structure filter medium illustrated in Fig. 2.

(Example 6)

For a mold-resistant air filter medium of Example 6, a mold-resistant air filter medium having a structure illustrated in Fig. 2 was prepared.

Specifically, an upstream air-permeable support member 21a, and a downstream air-permeable support member 21b were each a spun-bonded nonwoven fabric (average fiber diameter: 20 $\mu$m, basis weight: 30 g/m$^2$, thickness: 0.2 mm) formed of fibers having a core/sheath structure in which PET was used for the core and PE was used for the sheath.

A porous membrane 31 was obtained through the following steps.

The raw material used was the same three-component mixed powder as in Example 1, and 34 parts by weight of a hydrocarbon oil ("IP Solvent 2028" manufactured by Idemitsu Kosan Co., Ltd.) serving as a liquid lubricant (extrusion aid) was added to and mixed with, at 20°C, 100 parts by weight of the three-component mixed powder. The resulting mixture was extruded using a paste extruder to obtain a sheet-shaped molded body. A sheet die having a rectangular extrusion outlet with a short-side length of 2 mm and a long-side length of 220 mm was attached to a tip portion of the paste extruder. The sheet-shaped molded body was molded into a film using a calender roll heated to 70°C to obtain a fluororesin film. The resulting film was passed through a hot-air drying furnace at 200°C to evaporate and remove the hydrocarbon oil, thereby obtaining a belt-shaped unfired fluororesin film having an average thickness of 300 $\mu$m and an average width of 220 mm.

The unfired PTFE film was drawn in a longitudinal direction (lengthwise direction) at a drawing ratio of 6.5 times. The drawing temperature was 280°C. Then, the drawn unfired PTFE film was drawn in a width direction (transverse direction) at a drawing ratio of 11.0 times using a tenter capable of continuous clipping, and heat setting was performed. At this time, the drawing temperature was 290°C, and the heat setting temperature was 390°C. The upstream air-permeable support member 21a and the downstream air-permeable support member 21b were bonded to both sides (outer layers) of the thus-obtained porous membrane by thermal fusion using a laminating apparatus, thereby obtaining a three-layer structure filter medium illustrated in Fig. 2.

(Comparative Example 1)

For an air filter medium of Comparative Example 1, an air filter PTFE medium having a structure illustrated in Fig. 2, which is generally commercially available, was prepared.

The physical properties measured in Examples and Comparative Example are as follows.

(Thickness of porous membrane)

The thickness of a single membrane was determined by stacking five membranes to be measured, measuring the total thickness of the five membranes using a thickness meter (1D-110MH, manufactured by Mitutoyo Corporation), and dividing the total thickness by 5.

In Examples using two porous membranes, the total thickness of the two porous membranes was defined as a thickness.

(Mean pore size of porous membrane)

The mean pore size measured in conformity to the description of ASTM F316-86 was defined as a mean pore size (mean flow pore size) of the porous membrane. The actual measurement was performed using PMI Capillary Flow Porometer CFP-1100A (manufactured by PMI).

In a case where a plurality of porous membranes were present, the mean pore size of the plurality of porous membranes stacked on top of each other was measured.

(Surface mean height Rc of porous membrane)

The surface mean height Rc of the porous membrane was measured using a laser microscope VK-9710 (manufactured by Keyence Corporation) in conformity to the method described in JIS B 0601:2013 (ISO 4287:1997, Amd. 1: 2009). The measurement conditions were microscope magnification: 20 times (monitor: 400 times), measurement region: 130 $\mu$m, and roughness standard: ISO 4287 (JIS B 0601:2013). The surface mean height Rc of the porous membrane was determined from the obtained images using image analysis software (VK Analyzer). Under the above conditions, three points were measured while measurement points on the surface of the porous membrane were changed, and the average of the three measurement results was defined as the mean height Rc.

In a case where a plurality of porous membranes were present, the surface of a porous membrane located on the upstream side of air flow passing through the porous membranes was used as a measurement target.

(Surface arithmetic mean roughness Ra of porous membrane)

The surface arithmetic mean roughness Ra of the porous membrane was measured using a laser microscope VK-9710 (manufactured by Keyence Corporation) in conformity to the method described in JIS B 0601 (2013). The measurement conditions were microscope magnification: 20 times (monitor: 400 times), measurement region: 130 μm, roughness standard: ISO 4287 (JIS B 0601:2013). The surface arithmetic mean roughness Ra of the porous membrane was determined from the obtained images using image analysis software (VK Analyzer). Under the above conditions, three points were measured while measurement points on the surface of the porous membrane were changed, and the average of the three measurement results was defined as the arithmetic mean roughness Ra.

In a case where a plurality of porous membranes were present, the surface of a porous membrane located on the upstream side of air flow passing through the porous membranes was used as a measurement target.

(Water contact angle on surface of porous membrane)

The contact angle was determined by a 2/θ method using Drop Master 501 (manufactured by Kyowa Interface Science Co., Ltd.).

(Contact angle of liquid of water:IPA=80:20 on surface of porous membrane)

The contact angle was determined by a 2/θ method using Drop Master 501 (manufactured by Kyowa Interface Science Co., Ltd.).

(Contact angle of liquid of water:IPA=70:30 on surface of porous membrane)

The contact angle was determined by a 2/θ method using Drop Master 501 (manufactured by Kyowa Interface Science Co., Ltd.).

In a case where a plurality of porous membranes were present, each of the above contact angles was measured on a surface of a porous membrane located on the upstream side of air flow passing through the porous membranes.

(Basis weight of porous membrane)

The basis weight was defined as a value determined by cutting a sample into a rectangle having a predetermined area, measuring the mass (g) of the cut sample using a precision balance, and dividing the mass by the area. In Examples using two porous membranes, the basis weight of the plurality of porous membranes stacked on top of each other was determined.

(Pressure loss)

A measurement sample of the mold-resistant air filter medium was set in a filter holder having a diameter of 100 mm. The pressure on the inlet side was increased using a compressor, and the flow rate of air passing through the measurement sample was adjusted to 5.3 cm/s using a velocimeter. The pressure loss at this time was measured using a manometer.

(Collection efficiency for NaCl particles having particle size of 0.1 μm)

NaCl particles generated with an atomizer in conformity to the NaCl aerosol generating method (pressurized atomizing method) in JIS B 9928 Appendix 5 (specification) were classified using an electrostatic classifier (manufactured by TSI Incorporated) into particles having a particle size of 0.1 μm. The charge on the particles was neutralized using americium-241. Then, the flow rate at which the particles passed through the filter medium was adjusted to 5.3 cm/s. The numbers of particles before and after passage through the mold-resistant air filter medium serving as a measurement sample were determined using a particle counter (CNC manufactured by TSI Incorporated), and the collection efficiency was calculated from the following formula.

$$\text{Penetration rate (\%) = (CO/CI)} \times 100$$

$$\text{Collection efficiency (\%) = 100 - Penetration rate (\%)}$$

CO = number of NaCl particles of 0.1 μm on downstream side of measurement sample
CI = number of NaCl particles of 0.1 μm on upstream side of measurement sample

(Mold resistance test (wet method) of JIS Z 2911)

For Example 1, Example 5, and Comparative Example 1, a test conforming to the mold resistance test of JIS Z 2911 was performed.

Each sample was cut into a predetermined size and placed on an agar medium containing ammonium nitrate, potassium dihydrogen phosphate, magnesium sulfate heptahydrate, potassium chloride, iron(II) sulfate heptahydrate, agar, and purified water. A mixed spore suspension prepared by mixing spores of Aspergillus niger, Penicillium citrinum, Chaetomium globosum, and Myrothecium verrucaria was sprayed onto the sample, and the degree of mold growth on a sample surface was observed under a temperature condition of 26 ± 2°C.

For the evaluation of a mold growth state in the mold resistance test, a sample in which growth of hyphae was not visually observed was rated 0, a sample in which the area where growth of hyphae was observed did not exceed one-third of the entire area was rated 1, and a sample in which the area where growth of hyphae was observed exceeded one-third of the entire area was rated 2.

(Test conforming to mold resistance test of JIS Z 2911)

For each of Examples and Comparative Example, a test conforming to the mold resistance test of JIS Z 2911 was performed as follows. Each sample was cut into a predetermined size and placed on a potato-dextrose agar medium. A suspension of Cladosporium (1000 RLU) was inoculated, and the samples were left at room temperature. The degree of mold growth on a sample surface was visually observed over time (after 3 days, after 1 week, and after 2 weeks).

(ISO 846 Plastics - Evaluation of the action of microorganisms)

For Example 1 and Example 3, a test was performed in conformity to ISO 846:2019 (Method A) to examine the resistance of specimens to mold. In the test, test molds were each inoculated onto a malt extract agar medium and cultured at 29 ± 1°C for 10 to 20 days. Then, spore suspensions were prepared using an inorganic salt solution so that a spore count became $10^6$ /mL. A mixture obtained by mixing them in equal amounts was used as a test spore suspension. The test molds used were Aspergillus niger (NBRC 105649), Penicillium pinophilum (NBRC 100533), Paecilomyces variotii (NBRC 107725), Trichoderma virens (NBRC 6355), and Chaetomium globosum (NBRC 6347). The test spore suspension was sprayed and inoculated onto the test sample, which was cultured for 4 weeks under conditions of 29 ± 1°C and a relative humidity of 95% or more. At the second week and the fourth week of culture, mold growth on the test sample was observed visually and under a microscope.

For results corresponding to growth of hyphae, a sample in which no mold growth was observed under a microscope was rated "0", a sample in which mold was not visually observed but observed under a microscope occupied 25% or less of the entire area of the sample was rated "1a", a sample in which mold was not visually observed but observed under a microscope occupied 50% or less of the entire area of the sample was rated "1b", a sample in which mold was not visually observed but observed under a microscope occupied more than 50% of the entire area of the sample was rated "1c", a sample in which hyphal growth visually observed occupied less than 25% of the entire area of the sample was rated "2", a sample in which hyphal growth visually observed occupied less than 50% of the entire area of the sample was rated "3", a sample in which hyphal growth visually observed occupied 50% or more of the entire area of the sample was rated "4", and a sample in which hyphal growth was severe and covered the entire sample was rated "5".

The physical properties of the mold-resistant air filter medium and the physical properties of the porous membrane in each of Examples and Comparative Example are shown in Table 1 below.

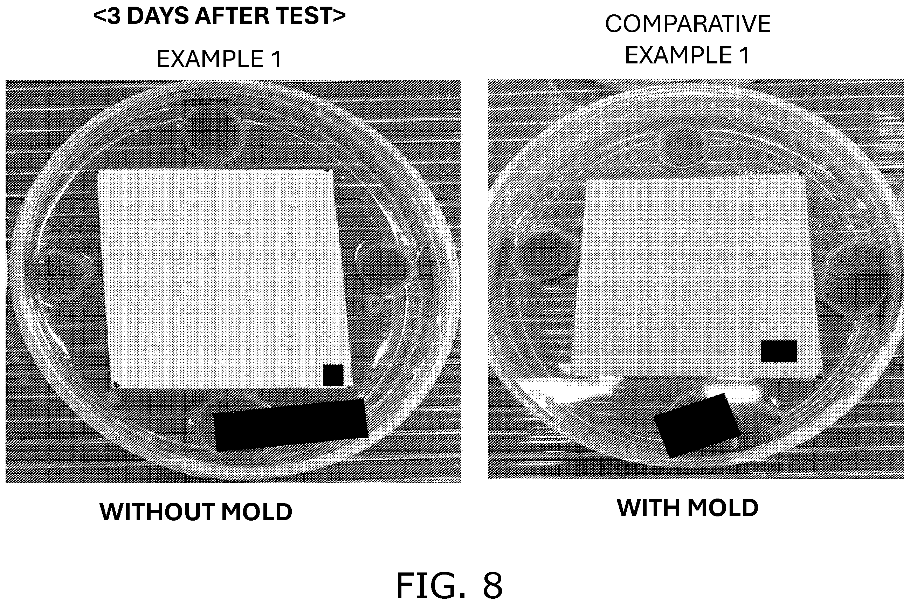

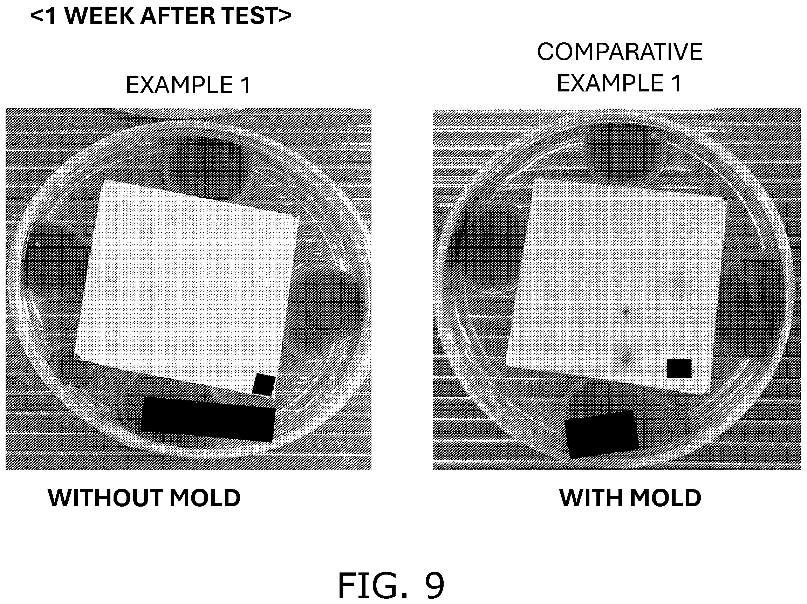

Fig. 8 and Fig. 9 respectively include photographs of the sample 3 days after the start of the test and photographs of the sample 1 week after the start of the test in the test conforming to the mold resistance test of JIS Z 2911 for Example 1 and Comparative Example 1. In the photographs, blacked-out portions indicate portions where characters for identification written on the samples and Petri dishes were present, and no mold was observed in the blacked-out portions.

[Table 1]

| | | | Example 1 | Example 2 | Example 3 | Example 4 | Example 5 | Example 6 | Comparative Example 1 |
|---|---|---|---|---|---|---|---|---|---|
| Porous membrane | Thickness | $\mu$m | 154 | 98 | 155 | 165 | 7 | 37 | 2.4 |
| | Mean pore size | $\mu$m | 2.3 | 2.3 | 2.4 | 2.4 | 0.5 | 3.6 | 0.48 |
| | Mean height Rc | $\mu$m | 38.7 | 37.0 | 196.0 | 139.0 | 8.0 | 34.7 | 5.1 |
| | Arithmetic mean roughness Ra | $\mu$m | 7.0 | 8.0 | 64.0 | 38.0 | 1.5 | 7.3 | 1.3 |
| | Contact angle (water) | degree | 149.6 | 150.1 | 154.0 | 154.2 | 153.0 | 154.0 | 149.0 |
| | Contact angle (water:IPA= 80:20) | degree | 132.1 | 132.4 | 132.5 | 132.1 | 129.4 | 125.4 | 126.7 |
| | Contact angle (water:IPA= 70:30) | degree | 129.8 | 129.6 | 135.9 | 136.0 | 127.2 | 123.9 | 125 |
| | Basis weight | g/m$^2$ | 9.5 | 9.4 | 8.4 | 8.4 | 1.3 | (3-4) | 0.8 |
| Mold-resistant air filter medium | Pressure loss (5.3 cm/s) | Pa | 146 | 141 | 168 | 154 | 222 | 128 | 280 |
| | Collection efficiency (0.1 $\mu$m 5.3 cm/s) | % | 99.975186 | 99.986960 | 99.999123 | 99.998100 | 99.999897 | 99.936000 | 99.999905 |
| | Test conforming to mold resistance test of JIS Z 2911 | 3 days | Without mold | Without mold | Without mold | Without mold | Without mold | Without mold | With mold |
| | | 1 week | Without mold | Without mold | Without mold | Without mold | With mold | With mold | With mold |
| | | 2 weeks | Without mold | With mold | Without mold | Without mold | With mold | With mold | With mold |

The above contact angle (water) was measured in conformity to the sessile drop method. However, since water did not move, values measured with the needle remaining inside the droplet are shown.

Example 1 and Example 5 achieved a rating of 0 (no growth of hyphae observed on an inoculated portion of the sample or test piece) in the mold resistance test of JIS Z 2911. In Comparative Example 1, a rating of 1 (an area where growth of hyphae was observed did not exceed one-third of the entire area) was obtained.

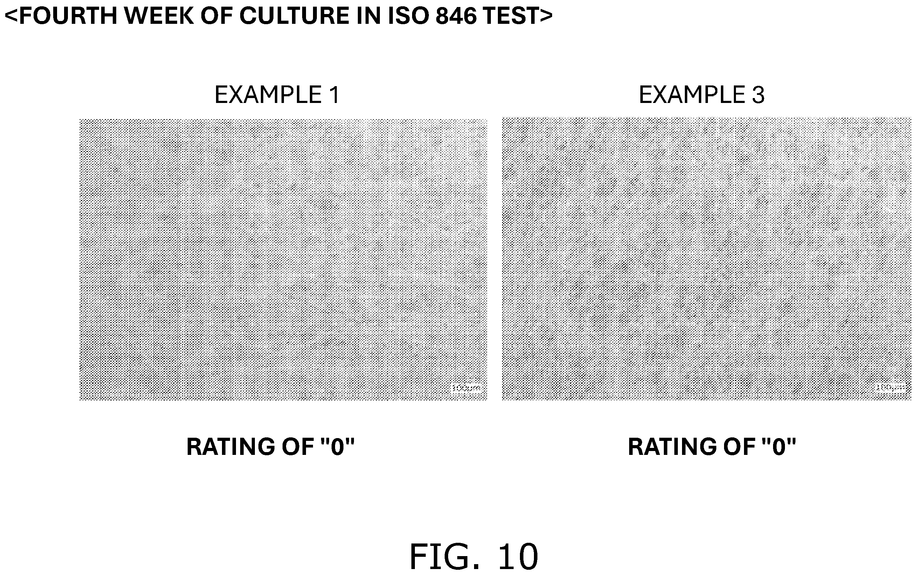

Example 1 and Example 3 achieved a rating of 0 (no mold growth observed under a microscope) at both the second week and the fourth week of culture in ISO 846 Plastics - Evaluation of the action of microorganisms. Fig. 10 includes photographs of the samples at the fourth week of culture in Example 1 and Example 3.

(Appendix)

Although embodiments of the present disclosure have been described above, it will be understood that various changes in form and details can be made without departing from the gist and scope of the present disclosure as set forth in the claims.

Reference Signs List

1 air filter unit
20 filter pack
25 frame body
30a, 30b, 30c, 30d mold-resistant air filter medium (air filter medium)
21 air-permeable support member
21a upstream air-permeable support member
21b downstream air-permeable support member
21c intermediate air-permeable support member
31 porous membrane
31a first porous membrane
31b second porous membrane
50 casing
50a intake port
50b blowout port
51 heat exchanger
52 humidity adjuster
53 fan
100 outdoor air treatment apparatus

Citation List

Patent Literature

PTL 1: Japanese Unexamined Patent Application Publication No. 2003-205211

**Claims**

1. An air filter medium comprising:
   a porous membrane having a surface mean height Rc of 6 $\mu$m or more and a water contact angle of 90 degrees or more on a membrane surface.

2. The air filter medium according to claim 1,
   wherein the porous membrane has a surface mean height Rc of 36 $\mu$m or more.

3. The air filter medium according to claim 1 or 2,
   wherein the porous membrane has a surface arithmetic mean roughness Ra of 6 $\mu$m or more.

4. The air filter medium according to any one of claims 1 to 3,

wherein the porous membrane has a mean pore size of 2 $\mu$m or more.

5. The air filter medium according to any one of claims 1 to 4,
   wherein the porous membrane has a mean pore size of 10 $\mu$m or less.

6. The air filter medium according to any one of claims 1 to 5,
   wherein the porous membrane has a thickness of 100 $\mu$m or more.

7. The air filter medium according to any one of claims 1 to 6,
   wherein a contact angle of an aqueous isopropyl alcohol solution having a concentration of 30 vol% is 127 degrees or more.

8. The air filter medium according to any one of claims 1 to 7,
   wherein the porous membrane contains a fluororesin.

9. The air filter medium according to any one of claims 1 to 8,
   wherein the porous membrane does not contain an antimold agent.

10. The air filter medium according to any one of claims 1 to 9,
    wherein the air filter medium is used in an environment having a relative humidity of 60% or more.

11. A method for using an air filter medium, comprising:
    using the air filter medium according to any one of claims 1 to 9 in an environment having a relative humidity of 60% or more.

12. An air treatment apparatus comprising:
    the air filter medium according to any one of claims 1 to 10.

30a

FIG. 1

30b

FIG. 2

30c

21a
31a
31b
21b

# FIG. 3

30d

21a
31a
21c
31b
21b

# FIG. 4

20

30a,b,c,d

FIG. 5

25

1

30a,b,c,d

20

## FIG. 6

100

30a,b,c,d  52  53

50a

51

50

50b

## FIG. 7

**<3 DAYS AFTER TEST>**

EXAMPLE 1

COMPARATIVE
EXAMPLE 1

**WITHOUT MOLD**

**WITH MOLD**

## FIG. 8

<1 WEEK AFTER TEST>

EXAMPLE 1

COMPARATIVE
EXAMPLE 1

WITHOUT MOLD

WITH MOLD

FIG. 9

EP 4 786 027 A1

**<FOURTH WEEK OF CULTURE IN ISO 846 TEST>**

EXAMPLE 1

EXAMPLE 3

**RATING OF "0"**

**RATING OF "0"**

FIG. 10

EP 4 786 027 A1

EP 4 786 027 A1

## INTERNATIONAL SEARCH REPORT

International application No.

**PCT/JP2024/034841**

### A. CLASSIFICATION OF SUBJECT MATTER

***B01D 39/16***(2006.01)i; ***B01D 71/32***(2006.01)i
FI:   B01D39/16 C; B01D71/32

According to International Patent Classification (IPC) or to both national classification and IPC

### B. FIELDS SEARCHED

Minimum documentation searched (classification system followed by classification symbols)

B01D39/00-20; B01D71/00-82; B32B5/00-32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-19972 A (CANON KABUSHIKI KAISHA) 04 February 2016 (2016-02-04) claims, examples | 1-9, 12 |
| Y | claims, examples | 1-12 |
| Y | JP 7-53763 A (MITSUBISHI CHEMICAL CORPORATION) 28 February 1995 (1995-02-28) paragraphs [0027]-[0029] | 1-12 |
| Y | WO 2006/104043 A1 (MITSUBISHI RAYON CO., LTD.) 05 October 2006 (2006-10-05) table 2 | 1-12 |
| A | JP 2018-51544 A (NITTO DENKO CORPORATION) 05 April 2018 (2018-04-05) | 1-12 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 December 2024** | **07 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

28

**INTERNATIONAL SEARCH REPORT**
Information on patent family members

International application No.

**PCT/JP2024/034841**

| Patent document cited in search report | | | Publication date (day/month/year) | Patent family member(s) | | | Publication date (day/month/year) |
|---|---|---|---|---|---|---|---|
| JP | 2016-19972 | A | 04 February 2016 | (Family: none) | | | |
| JP | 7-53763 | A | 28 February 1995 | (Family: none) | | | |
| WO | 2006/104043 | A1 | 05 October 2006 | US | 2008/0210664 | A1 | |
| | | | | table 2 | | | |
| | | | | TW | 200637648 | A | |
| | | | | KR | 10-2007-0113313 | A | |
| JP | 2018-51544 | A | 05 April 2018 | US | 2019/0232211 | A1 | |
| | | | | EP | 3520873 | A1 | |
| | | | | TW | 201813704 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003205211 A
- JP 53060979 A
- JP 57000135 A
- JP 61016907 A
- JP 62104816 A
- JP 62190206 A
- JP 63137906 A
- JP 2000143727 A
- JP 2002201217 A
- JP 2007046345 A
- JP 2007119829 A
- JP 2009001894 A
- JP 2010113950 A
- JP 2013027850 A
- JP 60042446 A
- JP 64001711 A
- JP 2261810 A

- JP 11240917 A
- JP 11240918 A
- JP 2003033555 A
- JP 2005061567 A
- JP 2007005361 A
- JP 2011055824 A
- WO 2005061567 A
- WO 2007005361 A
- WO 2011055824 A
- JP 10147617 A
- JP 61162503 A
- JP 48078252 A
- JP 2004050727 A
- JP 2009020187 A
- JP 2010114033 A
- JP 2017159281 A